# EUROPEAN PATENT SPECIFICATION

(11) **EP 1 053 535 B1**
(45) Date of publication and mention of the grant of the patent: **19.07.2006**
(21) Application number: 99902687.5
(22) Date of filing: 28.01.1999
(51) Int. Cl.: G07F 7/10

(54) **CONFIGURATION OF IC CARD**
CHIPKARTENKONFIGURATION
CONFIGURATION DE CARTE A CIRCUIT INTEGRE

(30) Priority: 06.02.1998 US 73906 P
(43) Date of publication of application: 22.11.2000
(73) Proprietor: MONDEX INTERNATIONAL LIMITED, London EC4M 5SQ (GB)
(72) Inventor: PEACHMAN, Anthony David, Brighton, East Sussex BN2 8AH (GB); SIMMONS, Ian Stephen, Broughton, Cambridgeshire PE17 3AT (GB)
(74) Representative: Robson, Aidan John
(86) International application number: PCT/GB1999/000289
(87) International publication number: WO 1999/040548

(56) References cited:
- EP-A- 0 190 733
- EP-A- 0 218 176
- EP-A- 0 451 936
- EP-A- 0 466 969
- WO-A-96/28795
- FR-A- 2 667 171
- US-A- 5 682 027

## Description

### BACKGROUND OF INVENTION

Integrated circuit cards are becoming increasingly used for many different purposes in the world today. An IC card typically is the size of a conventional credit card on which a computer chip is embedded. It comprises a microprocessor, read-only-memory (ROM), electrically erasable programmable read-only-memory (EEPROM), an Input/Output (I/O) mechanism and other circuitry to support the microprocessor in its operations. An IC card may contain one or more applications in memory. MULTOS^{™} is a multiple application operating system which runs on IC cards, among other platforms, and allows multiple applications to be executed on the card itself. This allows a card user to run many programs stored in the card (for example, credit/debit, electronic money/purse and/or loyalty applications) irrespective of the type of terminal (i.e., ATM, telephone and/or POS) in which the card is inserted for use.

EP-A-0218176 discloses an IC card for which at the time of manufacture has stored in a ROM an operating system and programming instructions. The card is personalised by storing in an EEPROM and address table with memory addresses of at least one of the programming instructions. The operating system can then access only those programming instructions indicated in the address table.

IC cards typically have limited storage capacity due to the size and cost restrains of locating memory on the card. Applications for multi-application smart cards are written in a programming language and are typically stored in the EEPROM whose contents can be changed during the lifetime of the card. One example of a programming language used in IC cards is the Multos Executable Language (MEL^{™}). The MEL program instructions are read from EEPROM when they are executed and are interpreted by the operating system stored in ROM.

The ROM on the IC card includes the operating system written in assembler language code for the particular integrated circuit configuration (native language type code). The operating system code stored in ROM is fixed when the ROM is initially written and the information stored in ROM will not change for the life of the card.

Also present in ROM can be subroutines called primitives written in a native language code for the microprocessor which can be called by either the operating system itself or by applications when they are executed. Primitives are written in native language (i.e. assembler language) so that they can be executed very quicky and minimal interpretation of the instructions is necessary for execution. These primitives are collections of instructions which typically perform a desired function, such as a mathematical or cryptographic function. The instructions are never changed during the lifetime of the card. Any data used or accessed by the primitives are stored in EEPROM so that the contents of the data elements can change as necessary.

Also capable of being stored in ROM are "codelets," which are sets of instructions written in a programming language (not native language code). These codelets can be stored in ROM so as to maximize the usage of memory and allow ROM to store complete applications as well as primitives. The codelet can be as small as one instruction or as large as will fit into the remaining ROM memory space. For example, the purse application described above can be stored in ROM when the card is initialized in order to free up space in EEPROM for additional applications which can be loaded at any time.

Once data is stored in ROM, the data can never be modified or deleted and new data cannot be added after ROM is set. Moreover, in prior art systems, when the chip card is manufactured, a primitive address table is stored on the card which allows the operating system to locate the memory address of a primitive. This address table in ROM is also permanently set.

In this system, described in WO98/52162 subsequent to card manufacture (at which time the ROM is fixed), the card is "personalized." This personalization step takes place either shortly after the card is made or anytime thereafter, up to a period of months or more. In the meantime, before the card is personalized, cards remain "blank" (i.e., unassigned to an individual user or group) and typically will be held at the card manufacturer or card issuer until needed. During this stage, because the cards have not yet been personalized, there is a greater risk that the cards would be improperly used.

The personalization step -- in which the cards are assigned to a particular user or group -- takes place at a location different from the card manufacturer generally under control of the card-issuer (i.e., the bank issuing the card) or some other personalization bureau ("PB"). A separate and preferably centrally located Certification Authority, which oversees the cards' interaction, provides the usually remote PB with appropriate security data, discussed below, to allow the PB to personalize (i.e., enable) the card, and to allow an application provider to load (either at the time of enablement or later) an application program, such as a purse application, onto the card.

One of the problems confronting multi-application card designers is how to address the situation where after the primitive or codelet is masked or otherwise stored in the ROM at the time of manufacture (and thus cannot thereafter be changed), the primitive or codelet needs to be replaced, modified or updated to fix a bug or to take advantage of a more efficient or effective routine. Another concern is to ensure that the original primitives and codelets masked into ROM are not capable of use until the card is personalized, i.e. enabled for a particular user or group, with individual keys and identifiers. Accordingly the invention aims to address at least some of the foregoing problems and more particularly to provide a method and system which solves these problems.

### SUMMARY OF THE INVENTION

The subject-matter of the invention is defined by claims 1 and 7.

### BRIEF DESCRIPTION OF THE DRAWINGS

Further objects, features and advantages of the invention will become apparent from the following detailed description taken in conjunction with the accompanying figures showing illustrative embodiments of the invention, in which
Fig. 1 is a block diagram illustrating the three states in the life of a multi-application IC card in a secure system;
Fig. 2 is a block diagram showing the components of the system architecture for the enablement process of an IC card in a secure multi-application IC card system;
Fig. 3 is a block diagram illustrating the read only memory space segments for an IC card at the time of manufacture in accordance with an embodiment of the present invention;
Fig. 4 is a block diagram illustrating the electrically erasable programmable read-only-memory space segments for an IC card after it has been loaded at the personalization stage in accordance with an embodiment of the present invention;
Fig. 5 is a block diagram illustrating the address table loaded in EEPROM of an IC card at the personalization stage, in accordance with an embodiment of the present invention;
Fig. 6 illustrates an integrated circuit card which can be used in connection with an embodiment of this invention; and
Fig. 7 is a functional block diagram of the integrated circuit shown in Fig. 6.

Throughout the figures, the same reference numerals and characters, unless otherwise stated, are used to denote like features, elements, components or portions of the illustrated embodiments. Moreover, while embodiments of the subject invention will now be described in detail with reference to the figures, it is done so in connection with the illustrative embodiments. It is intended that changes and modifications can be made to the described embodiments without departing from the true scope and spirit of the subject invention as defined by the appended claims.

### DETAILED DESCRIPTION OF THE DRAWINGS

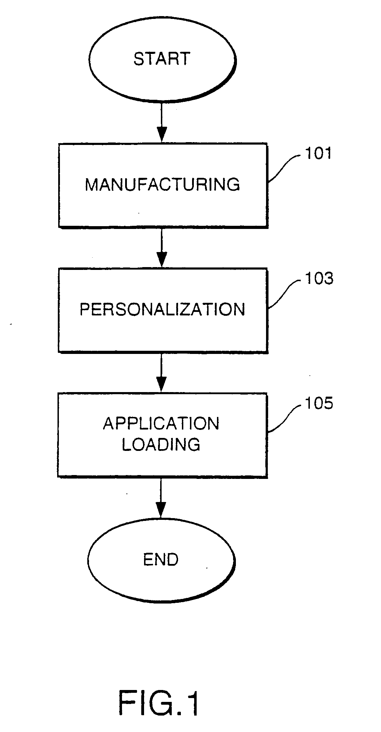

Figure 1 shows the three steps involved in providing an operational multi-application IC card in a secure system. The first step is the card manufacturing step 101. The second step is the personalization step 103 where card personalization data (also called entity authentication data) is loaded onto the card. The third step is the application loading step 105 which checks to see if a card is qualified to receive an application, i.e., when the personalization data is checked against the application permissions data associated with the application to be loaded. Each of these three steps is described in detail in Annex A.

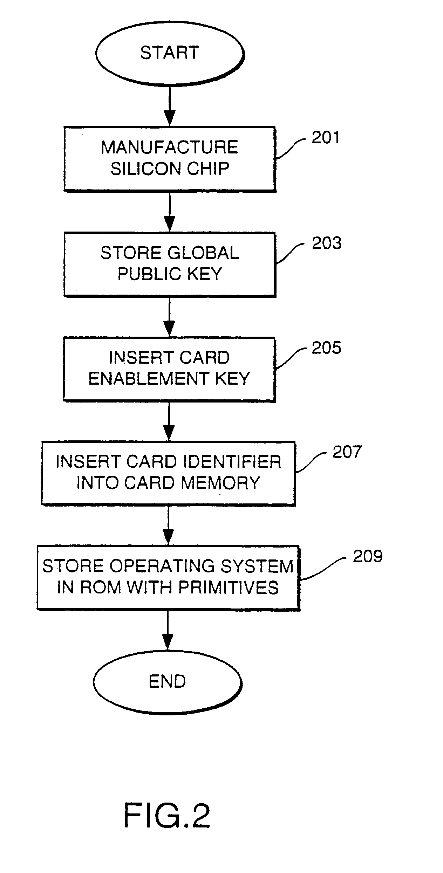

Figure 2 shows the components of the system architecture for the card initialization process of an IC card in a secure multiple application IC card system. The system includes a card manufacturer 102, a personalization bureau 104, an application loader 106, the IC card 107 being initialized, the card user 109 and the certification authority 111 for the entire multiple application secure system. The card user 109 is the person or entity who will use the stored applications on the IC card.

The card user would contact a card issuer 113, such as a bank which distributes IC cards, and request an IC card with the two applications both residing in memory of a single IC card. The integrated circuit chip for the IC card would be manufactured by manufacturer 102 and sent to the card issuer 113 (or an entity acting on its behalf) in the form of an IC chip on a card. During the manufacturing process, data is transmitted 115 via a data conduit from the manufacturer 102 to card 107 and stored in IC card 107's memory. (Any of the data conduits described in this figure could be a telephone line, Internet connection or any other transmission medium.) The certification authority 111, which maintains encryption/decryption keys for the entire system, transmits 117 security data (i.e., global public key) to the manufacturer over a data conduit which is placed on the card by the manufacturer along with other data, such as the card enablement key and card identifier. The card's multiple application operating system is also stored in ROM and placed on the card by the manufacturer. After the cards have been initially processed, they are sent to the card issuer for personalization and application loading.

The card issuer 113 performs, or has performed by another entity, two separate functions. First, the personalization bureau 104 personalizes the IC card 107 in the ways described above, and second, the application loader 106 loads the application provided the card is qualified, as described in Annex A

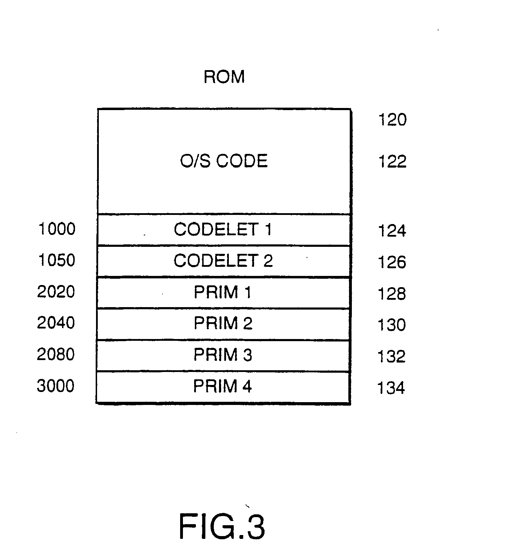

Backtracking now to the time of manufacture, the ROM 120 of IC card is loaded, as illustrated in Figure 3, with operating system code 122, codelets 1 and 2 identified respectively as 124, 126, at addresses 1000 and 1050, and primitives 1, 2, 3, 4 identified respectively are 128, 130, 132, 134, at addresses 2020, 2040, 2080, and 3000. The addresses are preferably physical addresses in ROM, an offset from a primitive starting pointer, or any other addressing scheme.

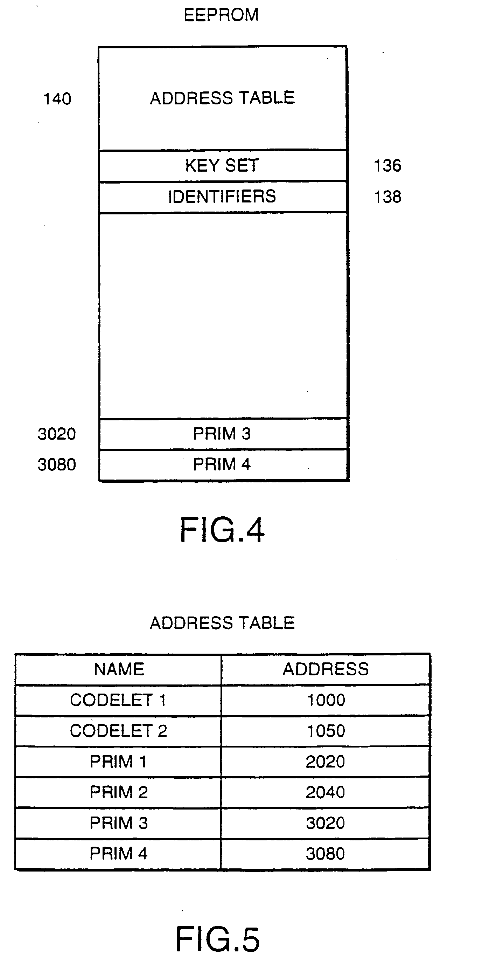

Subsequently, as described above, the card is personalized. The CA provides the PB with personalization information, which may include an individual key set 136. This information is sent to the PB usually at a remote location either through the Internet, by CD ROM or other data conduit or storage device. The PB remotely loads this information onto the EEPROM of the card (see Fig. 4) along with certain identifiers 138, such as a card identification, an issuer identification, product type identification (representing the type of application, i.e., purse, loyalty, etc.) and the date of loading. Additional primitive or codelet code can also be loaded at this time.

In accordance with an embodiment of this invention, the PB further remotely loads onto the EEPROM of the card the codelet/primitive address table 140. As shown in Fig. 5, this address table 140 contains a listing of the names of the codelets and primitives to be called by either the application program or operating system together with the memory addresses containing the code to be called. The location of code corresponding to a primitive call by the operating system or an application will be determined at this time. Thus, the controlling authority or system operator can select which version of code stored in the card will be executed when a particular primitive name is called.

In this particular case, a program instruction such as:
CALL PRIM 4 (DATA) would result in a search of the address table to locate the address of PRIM 4. Because a new PRIM 4, with address 3080, was added into the programmable portion of the card memory at time of personalization to replace old PRIM 4, the operating system will simply fetch the new PRIM 4 at location 3080 as indicated in the address table. The old code at memory location 3000 will never be accessed by the operating system because there is no entry in the address table pointing to the old code.

Accordingly, this remote loading of an address table at the time of personalization allows the system (1) to control enablement until desired; and (2) to make use of a card despite an outdated codelet or primitive which may have been permanently placed in the card at the time of manufacture.

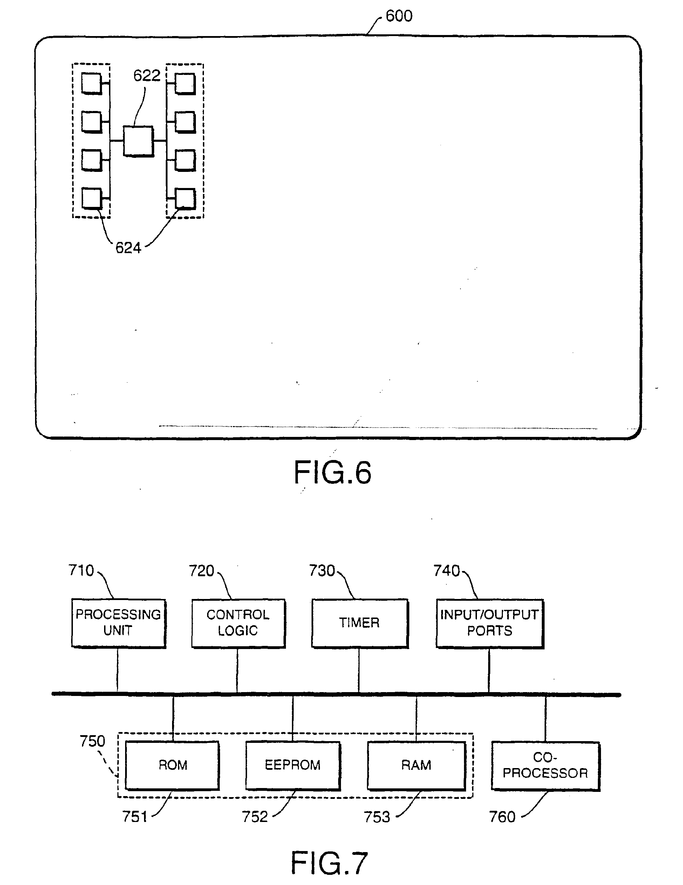

Figure 6 illustrates a card 600 incorporating integrated circuit technology that can be used with the presently claimed invention. Card 600 looks similar to a conventional credit card, but also includes integrated circuit (IC) 622, which contains a microprocessor, and electrical contacts 624 for communication between IC 622 and devices external to card 600. Card 600 can be used for example, as a credit card, a debit card, and\or as an electronic cash card, i.e., a card containing monetary value that can be transferred when the cardholder makes purchases, for example, a MONDEY^{™} cash card.

Figure 7 is a functional block diagram of the IC section 622 and contains at least processing unit 710 and memory unit 750. Preferably, IC 722 also includes control logic 720, a timer 730, and input/output ports 740. IC section 722 can also include a co-processor 760. Control logic 720 provides, in conjunction with processing unit 710, the control necessary to handle communications between memory unit 750 and input/output ports 740. Timer 730 provides a timing reference signal for processing unit 710 and control logic 720. Co-processor 760 provides the ability to perform complex computations in real time, such as those required by cryptographic algorithms.

The foregoing merely illustrates the principles of the invention.

## Claims

1. A secure multiple application card system including an IC card comprising a microprocessor (710), a read-only memory (750) and an electronically erasable programmable read only memory (752), said system comprising:
means for manufacturing (101) said IC card and for storing at the time of manufacture in said read-only memory (750) an operating system and programming instructions; and
means for personalizing (103) said IC card after the time of manufacture and for storing at the time of personalization in said electronically erasable programmable read only memory (751) an address table (140) with memory addresses of at least one of said programming instructions,
wherein additional programming instructions can be loaded onto the card at the time of personalization and stored in the electronically erasable programmable read only memory, and said additional programming instructions comprise updated versions of the previously stored programming instructions and the address table includes addresses for the updated programming instructions,
and wherein the operating system will only access programming instructions in accordance with addresses included in the address table.

2. The system of claim 1, wherein said means for personalizing said IC card and for storing in said electronically erasable programmable read only memory further stores additional programming instructions.

3. The system of claim 2, wherein said additional programming instructions comprise at least one codelet.

4. The system of claim 3, wherein said address table comprises a listing of the names of the codelets to be accessed and memory addresses containing the codelets.

5. The system of claim 2, wherein said additional programming instructions comprise at least one primitive.

6. The system of claim 5, wherein said address table comprises a listing of the primitives names to be accessed and memory addresses containing the primitives.

7. A process for providing a secure multiple application card system including an IC card comprising a microprocessor, a read-only memory and an electronically erasable programmable read only memory, said process comprising the steps of:
manufacturing said IC card and for storing at the time of manufacture in said read-only memory an operating system and programming instructions; and
personalizing said IC card after said time of manufacture by storing in said electronically erasable programmable read-only memory an address table with memory address; and
wherein the step of personalizing the IC card includes storing additional programming instructions in the electronically erasable programmable read only memory and said additional programming instructions comprise updated versions of said previously store programming instructions, and inserting addresses for said additional programming instructions in said address table, whereby the operating system will only access programming instructions in accordance with addresses stored in the address table.

8. The process of claim 7, wherein said step for storing in said electronically erasable programmable read only memory further includes storing additional programming instructions.

9. The process of claim 8, wherein said additional programming instructions comprises at least one primitive.

10. The process of claim 9, wherein said address table comprises a listing of the primitives names to be called and memory addresses containing the primitives.

11. The process of claim 7, wherein said additional programming instructions comprises at least one codelet.

12. The process of claim 11, wherein said address table comprises a listing of codelets names to be called and memory addresses containing the codelets.

## Patentansprüche

1. Sicheres Mehrfachanwendungs-Kartensystem mit einer IC-Karte, die einen Mikroprozessor (710), einen Festwertspeicher (750) und einen elektronisch löschbaren programmierbaren Festwertspeicher (752) umfasst, wobei das genannte System Folgendes umfasst:
Mittel zum Herstellen (101) der genannten IC-Karte und zum Speichern eines Betriebssystems und von Programmieranweisungen in dem genannten Festwertspeicher (750) bei der Herstellung; und
Mittel zum Personalisieren (103) der genannten IC-Karte nach der Herstellung und zum Speichern einer Adresstabelle (140) mit Speicheradressen von wenigstens einer der genannten Programmieranweisungen bei der Personalisierung in dem genannten elektronisch löschbaren programmierbaren Festwertspeicher (751),
wobei bei der Personalisierung zusätzliche Programmieranweisungen auf die Karte geladen und in dem elektronisch löschbaren programmierbaren Festwertspeicher gespeichert werden können, und wobei die genannten zusätzlichen Programmieranweisungen aktualisierte Versionen der zuvor gespeicherten Programmieranweisungen umfassen und die Adresstabelle Adressen für die aktualisierten Programmieranweisungen beinhaltet,
und wobei das Betriebssystem nur auf Programmieranweisungen gemäß in der Adresstabelle enthaltenen Adressen zugreift.

2. System nach Anspruch 1, wobei das genannte Mittel zum Personalisieren der genannten IC-Karte und zum Speichern in dem genannten elektronisch löschbaren programmierbaren Festwertspeicher ferner zusätzliche Programmieranweisungen speichert.

3. System nach Anspruch 2, wobei die genannten zusätzlichen Programmieranweisungen wenigstens ein Codelet umfassen.

4. System nach Anspruch 3, wobei die genannte Adresstabelle eine Auflistung der Namen der Codelets, auf die zugegriffen werden soll, und der die Codelets enthaltenden Speicheradressen umfasst.

5. System nach Anspruch 2, wobei die genannten zusätzlichen Programmieranweisungen wenigstens eine Grundstruktur umfassen.

6. System nach Anspruch 5, wobei die genannte Adresstabelle eine Auflistung der Grundstrukturnamen, auf die zugegriffen werden soll, und der die Grundstrukturen enthaltenden Speicheradressen umfasst.

7. Verfahren zum Bereitstellen eines sicheren Mehrfachanwendungs-Kartensystems mit einer IC-Karte, die einen Mikroprozessor, einen Festwertspeicher und einen elektronisch löschbaren programmierbaren Festwertspeicher umfasst, wobei das genannte Verfahren die folgenden Schritte umfasst:
Herstellen der genannten IC-Karte und Speichern eines Betriebssystems und von Programmieranweisungen in dem genannten Festwertspeicher bei der Herstellung; und
Personalisieren der genannten IC-Karte nach der Herstellung durch Speichern einer Adresstabelle mit Speicheradressen in dem genannten elektronisch löschbaren programmierbaren Festwertspeicher; und
wobei der Schritt des Personalisierens der IC-Karte das Speichern von zusätzlichen Programmieranweisungen in dem elektronisch löschbaren programmierbaren Festwertspeicher beinhaltet und die genannten zusätzlichen Programmieranweisungen aktualisierte Versionen der genannten zuvor gespeicherten Programmieranweisungen und das Einfügen von Adressen für die genannten zusätzlichen Programmieranweisungen in die genannte Adresstabelle umfassen, so dass das Betriebssystem nur auf Programmieranweisungen gemäß in der Adresstabelle gespeicherten Adressen zugreift.

8. Verfahren nach Anspruch 7, wobei der genannte Schritt zum Speichern in dem genannten elektronisch löschbaren programmierbaren Festwertspeicher ferner das Speichern zusätzlicher Programmieranweisungen beinhaltet.

9. Verfahren nach Anspruch 8, wobei die genannten zusätzlichen Programmieranweisungen wenigstens eine Grundstruktur umfassen.

10. Verfahren nach Anspruch 9, wobei die genannte Adresstabelle eine Auflistung der aufzurufenden Grundstrukturnamen und der die Grundstrukturen enthaltenden Speicheradressen umfasst.

11. Verfahren nach Anspruch 7, wobei die genannten zusätzlichen Programmieranweisungen wenigstens ein Codelet umfassen.

12. Verfahren nach Anspruch 11, wobei die genannte Adresstabelle eine Auflistung von aufzurufenden Codelet-Namen und die Codelets enthaltenden Speicheradressen umfasst.

## Revendications

1. Système sécurisé de cartes à application multiple comprenant une carte à circuits intégrés comprenant un microprocesseur (710), une mémoire morte (750) et une mémoire morte programmable effaçable électroniquement (752), ledit système comprenant :
des moyens pour fabriquer (101) ladite carte à circuits intégrés et pour stocker un système d'exploitation et des instructions de programmation dans ladite mémoire morte (750) au moment de la fabrication; et
des moyens pour personnaliser (103) ladite carte CI suite à la fabrication et pour stocker une table d'adresses (140) avec des adresses en mémoire d'au moins l'une desdites instructions de programmation dans ladite mémoire morte programmable effaçable électroniquement (751) au moment de la personnalisation,
dans lequel des instructions de programmation supplémentaires peuvent être chargées sur la carte au moment de la personnalisation et stockées dans la mémoire morte programmable effaçable électroniquement, et lesdites instructions de programmation supplémentaires comprennent des versions actualisées des instructions de programmation stockées précédemment et la table d'adresses comprend des adresses pour les instructions de programmation actualisées,
et dans lequel le système d'exploitation n'accèdera des instructions de programmation que conformément aux adresses incluses dans la table d'adresses.

2. Le système de la revendication 1, dans lequel lesdits moyens de personnalisation de ladite carte CI et de stockage dans ladite mémoire morte programmable effaçable électroniquement, stockent en outre des instructions de programmation supplémentaires.

3. Le système de la revendication 2, dans lequel lesdites instructions de programmation supplémentaires comprennent au moins un codelet.

4. Le système de la revendication 3, dans lequel ladite table d'adresses comprend un listage des noms des codelets à accéder et des adresses en mémoire contenant les codelets.

5. Le système de la revendication 2, dans lequel lesdites instructions de programmation supplémentaires comprennent au moins une primitive.

6. Le système de la revendication 5, dans lequel ladite table d'adresses comprend un listage des noms des primitives à accéder et des adresses en mémoire contenant les primitives.

7. Procédé pour fournir un système sécurisé de cartes à application multiple englobant une carte CI comprenant un microprocesseur, une mémoire morte et une mémoire morte programmable effaçable électroniquement, ledit procédé comprenant les étapes consistant à :
fabriquer ladite carte CI et stocker un système d'exploitation et des instructions de programmation dans ladite mémoire morte au moment de la fabrication; et
personnaliser ladite carte CI suite à la fabrication en stockant une table d'adresses avec une adresse en mémoire dans ladite mémoire morte programmable effaçable électroniquement; et
dans lequel l'étape de personnalisation de la carte CI englobe stocker des instructions de programmation supplémentaires dans la mémoire morte programmable effaçable électroniquement et lesdites instructions de programmation supplémentaires comprennent des versions actualisées desdites instructions de programmation stockées précédemment, et introduire des adresses pour lesdites instructions de programmation supplémentaires dans ladite table d'adresses, en vertu de quoi le système d'exploitation n'accèdera des instructions de programmation que conformément aux adresses stockées dans la table d'adresse.

8. Le procédé de la revendication 7, dans lequel ladite étape de stockage dans ladite mémoire morte programmable effaçable électroniquement comprend en outre stocker des instructions de programmation supplémentaires.

9. Le procédé de la revendication 8, dans lequel lesdites instructions de programmation supplémentaires comprennent au moins une primitive.

10. Le procédé de la revendication 9, dans lequel ladite table d'adresses comprend un listage des noms des primitives à demander et des adresses en mémoire contenant les primitives.

11. Le procédé de la revendication 7, dans lequel lesdites instructions de programmation supplémentaires comprennent au moins un codelet.

12. Le procédé de la revendication 11, dans lequel ladite table d'adresses comprend un listage des noms des codelets à demander et des adresses en mémoire contenant les codelets.
